Europäisches Patentamt

European Patent Office

Office européen des brevets

(19)

(11) EP 1 052 874 A1

(12) **EUROPÄISCHE PATENTANMELDUNG**

(43) Veröffentlichungstag:
   15.11.2000  Patentblatt 2000/46

(51) Int Cl.$^7$: **H04Q 11/04**, H04Q 11/00,
   H04L 12/56

(21) Anmeldenummer: 99109554.8

(22) Anmeldetag: 12.05.1999

(84) Benannte Vertragsstaaten:
   **AT BE CH CY DE DK ES FI FR GB GR IE IT LI LU
   MC NL PT SE**
   Benannte Erstreckungsstaaten:
   **AL LT LV MK RO SI**

(71) Anmelder: **SIEMENS AKTIENGESELLSCHAFT**
   **80333 München (DE)**

(72) Erfinder: **Pietzsch, Joachim**
   **81379 München (DE)**

(54) **Vorrichtung zum Routen von Informationen durch grosse Koppelfelder**

(57)    Der Trend zu immer leistungsfähigeren Kommunikationssystemen erfordert immer größere Koppelfelder. Dabei ergibt sich das Problem, daß eine elektrische Durchschaltung (Wegesuche) mit zunehmender Größe immer komplexer und vom dynamischen Gesichtspunkt aus gesehen ungünstiger wird. Weiterhin nimmt der Verkabelungsaufwand im Koppelfeld selbst drastisch zu. Die Erfindung schafft hier Abhilfe, indem eingangsseitig des Koppelfeldes die elektrischen in optische Informationssignale umgesetzt werden,die mit Hilfe des WDM Übertragungsverfahrens durch das Koppelfeld durchgeschaltet werden.

## FIG 1

**Beschreibung**

Die Erfindung betrifft eine Vorrichtung gemäß dem Oberbegriff von Patentanspruch 1.

Der Trend zu immer leistungsfähigeren Kommunikationssystemen erfordert immer größere Koppelfelder, über die die Informationssignale geleitet werden. Dies gilt insbesondere für Kommunikationssysteme, die Informationssignale nach einem asynchronen Transfermodus (ATM) oder nach einem Internetprotokoll (TCP/IP) durchschalten. Dabei ergibt sich das Problem, daß eine elektrische Durchschaltung (Wegesuche) mit zunehmender Größe immer komplexer und vom dynamischen Gesichtspunkt aus gesehen ungünstiger wird. Weiterhin nimmt der Verkabelungsaufwand im Koppelfeld selbst drastisch zu.

Der Erfindung liegt die Aufgabe zugrunde, die Struktur eines Koppelfeldes anzugeben, das zeitgemäßen Anforderungen bei vergleichsweise geringem Schaltungsaufwand gerecht wird.

Die Erfindung wird ausgehend vom Oberbegriff von Patentanspruch 1 durch die im kennzeichnenden Teil angegebenen Merkmale gelöst.

Der Vorteil an der Erfindung ist insbesondere darin zu sehen, daß die durch das Koppelfeld durchzuschaltenden InformationsSignale in optische Signale umgesetzt und mit Hilfe des WDM-Übertragungsverfahrens(Wave Division Multiplexing) durchgeschaltet werden. Dadurch kann das Koppelfeld in der Struktur als einstufiges Koppelfeld realisiert werden. Damit ist der Vorteil verbunden, daß ein großes blockierungsfreies Koppelfeld entsteht, durch das Informationssignale ohne Wegesuche geroutet werden können. Die Verbindungswege innerhalb des Koppelfeldes sind dabei als optische Fasern ausgebildet, wobei eine Erhöhung des Durchsatzes auf einer Faser durch die gleichzeitige Verwendung von mehreren Lichtwellenlängen erreicht wird.

Vorteilhafte Ausgestaltungen der Erfindung sind in den Unteransprüchen angegeben.

Die Erfindung wird im folgenden anhand eines Ausführungsbeispiels näher erläutert.

Es zeigen:

Figur 1    die erfindungsgemäße Struktur eines Koppelfeldes

Figur 2    eingangsseitig angeordnete Teilkoppelfelder mit horizontal angeordneten Laserarrays

Figur 3    eingangsseitige angeordnete Teilkoppelfelder mit vertikal angeordneten Laserarrays

Figur 4    eine spezielle Ausprägung der Erfindung.

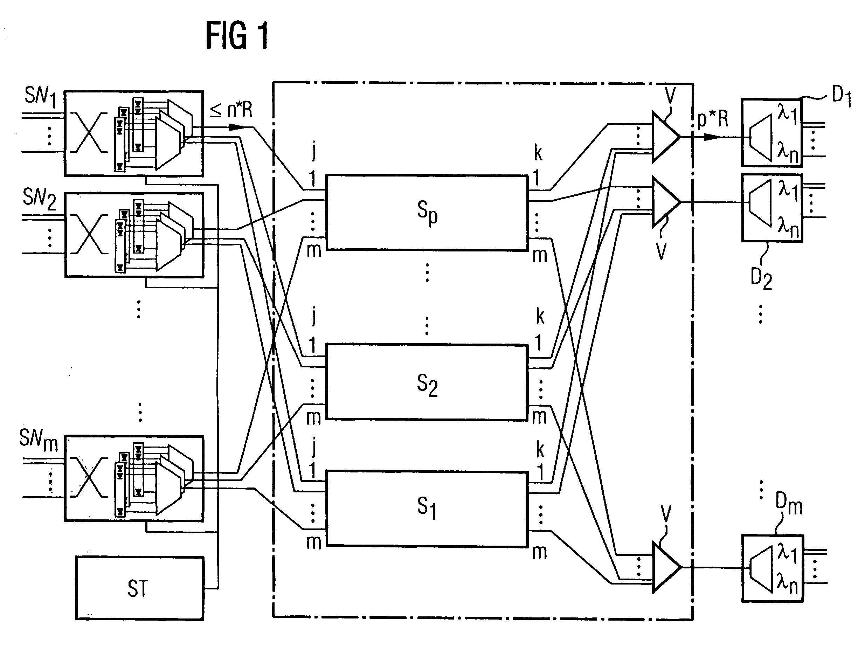

In Figur 1 ist die Struktur eines großen Koppelfeldes aufgezeigt. Demgemäß sind eingangsseitig eine Mehrzahl von (kleineren) Teilkoppelfeldern $SN_1...SN_m$ angeordnet. Die durchzuschaltenden Informationssignale werden diesen als elektrische Informationssignale zugeführt. In jedem dieser Teilkoppelfelder $SN_1...SN_m$ sind Vorrichtungen $LA_1...LA_p$ zum Umsetzen dieser elektrischen Signale in optische Signale vorgesehen. Diese Vorrichtungen $LA_1...LA_p$ sind vorzugsweise als Laserarrays ausgebildet, die eine Mehrzahl von Laserdioden $LD_1...LD_n$ beinhalten. Eine Laserdiode emittiert Licht mit genau einer Wellenlänge, womit demzufolge ein Laserarray eine Mehrzahl n von Lichtstrahlen unterschiedlicher Frequenz emittieren kann. Die Laserdioden können einzeln angesteuert werden. Die Steuerungsvorgänge werden von einer zentralen Steuereinrichtung ST vorgenommen.

Jedes der Laserarrays $LA_1...LA_p$ steht weiterhin in Wirkverbindung mit jeweils einem optischen Multiplexer MUX, der den Laserarrays nachgeschaltet ist. Sie haben die Aufgabe, die von den jeweils zugeordneten Laserarrays $LA_1...LA_p$ empfangenen optischen Informationssignale unterschiedlicher Frequenz über eine Faser den nachfolgenden Einrichtungen zuzuführen.

Gemäß vorliegendem Ausführungsbeispiel sind eingangsseitig m derart ausgebildete Teilkoppelfelder $SN_1...SN_m$ vorgesehen. Jedes dieser Teilkoppelfelder weist eine Durchsatzrate von p*R (p Kanäle mit einer Datenrate von R) auf. Jede der p Laserarrays $LA_1...LA_p$ können n elektrische Informationssignale in genau n optische Signale umwandeln, die sich dann jeweils durch n unterschiedliche Wellenlängen $\lambda_n$ unterscheiden. Diese n optischen Informationssignale werden jeweils dem optischen Multiplexer MUX zugeführt, der die n optischen Informations-signale aufnimmt und über genau eine optische Faser den nachfolgenden Einrichtungen zuführt. Von den n*p Ausgangskanälen werden im Normalbetrieb (kein Multicast) p wahlfreie Kanäle eines jeden Teilkoppelfeldes entsprechend der maximalen Eingangslast eines Teilkoppelfeldes genutzt. Die p ankommenden elektrischen Informationssignale werden somit durch die Laserdioden $LD_1...LD_n$ durch geeignete Emissionswellenlängen in p optische Informationssignale umgesetzt, wobei lediglich p Ausgangsfasern notwendig sind.

Jedes Teilkoppelfeld $SN_1...SN_m$ ist über eine optische Ausgangsfaser mit einem aus einer Mehrzahl p von Teilsortiernetzwerken $S_1..S_p$ gebildeten Sortiernetzwerk verbunden. Jedes dieser Teilsortiernetzwerke $S_1...S_p$ weist m Eingänge und m Ausgänge auf. Das periphere Teilkoppelfeld $SN_1$ ist somit über eine optische Faser mit dem Teilsortiernetzwerk $S_1$, über eine weitere optische Faser mit dem Teilsortiernetzwerk $S_2$ usw. verbunden.

Das Sortiernetzwerk selbst ist als optischer Filter ausgebildet und weist Multiplex - und Demultiplexfunktionalität auf. Jedes Sortiernetzwerk zerlegt das von den optischen Multiplexern MUX ausgesendete, aus maximal n Wellenlängen bestehende optische Mischsignal in die einzelnen Informationssignale und leitet diese nach Maßgabe der Wellenlänge an die betreffenden Ausgänge des Sortiernetzwerkes (WDM-Übertragungsverfahren). Hierbei ist von entscheidender Bedeutung, daß die Zuordnung Wellenlänge/ Ausgang abhängig vom Eingang ist. Dies bedeutet, daß von jedem Eingang des Sortiernetzwerkes eine andere Wellenlänge auf einen bestimmten Ausgang sortiert wird. Der Sortieralgorithmus lautet:

$$k=(j+i+z-3)\bmod n+1,$$

wobei

    z: Nummer des Sortiernetzwerkes
    j: Eingang des Sortiernetzwerkes
    i: Nummer der Wellenlänge.

bedeutet.

Weiterhin sind, wie aus Fig. 1 ersichtlich, dem Sortiernetzwerk $S_1...S_p$ über Verzweigereinrichtungen V Ausgangsmodule $D_1...D_m$ nachgeschaltet. Hierbei ist der Ausgang k eines der Sortiernetzwerke $S_1..S_p$ mit dem k-ten Ausgangsmodul verbunden, wobei über die Verzweigereinrichtungen V eine Bündelung der p Fasern erfolgt. Mit einer derartigen Vorrichtung kann jedes der m Ausgangsmodule $D_1...D_m$ von jedem der Teilkoppelfelder $SN_1...SN_m$ erreicht werden. Weiterhin kann jeder Ausgang i (charakterisiert durch die Wellenlänge $\lambda_i$) im jeweiligen Ausgangsmodul erreicht werden.

Da im Sortiernetzwerk $S_1..S_p$ und den nachfolgenden Verzweigereinrichtungen V und Demultiplexern $D_1...D_m$ keine Vermittlungsfunktion enthalten ist, stellt die Struktur ein einstufiges Koppelfeld dar, das blockierungsfrei und ohne Wegesuche arbeitet. Hierbei gilt als Voraussetzung, daß auch die eingangsseitig angeordneten Teilkoppelfelder $SN_1...SN_m$ dieselbe Eigenschaft aufweisen. Kollisionen durch das gleichzeitige Zugreifen von mehreren Eingängen auf den gleichen Ausgang müssen durch eine geeignete Steuerung der Ausgänge der eingangsseitig angeordneten peripheren Teilkoppelfelder $SN_1...SN_m$ vermieden werden. Die Steuerung ST hat dafür zu sorgen, daß immer nur ein Ausgang dieser Teilkoppelfelder auf einen bestimmten Eingang zugreifen kann.

Die Maximalzahl der peripher angeordneten Teilkoppelfelder $SN_1...SN_m$, besträgt n (verfügbare Wellenlänge). In der Praxis wird man daher die Sortiernetzwerke möglichst von Anfang an als nxn Matrizen ausbilden. Die Zahl der Wellenlängen n muß in jedem Fall mindestens gleich der Zahl p der Eingangskanäle pro Koppelfeld sein. Die optimale Dimensionierung ist für m = n = p erreicht.

Die Realisierung des Sortiernetzwerkes kann vorzugsweise durch Phased Array Filter (AWG (Arrayed Waveguide)) erfolgen. Sie erfüllen die oben aufgestellten Anforderungen mit minimalem Hardwareaufwand.

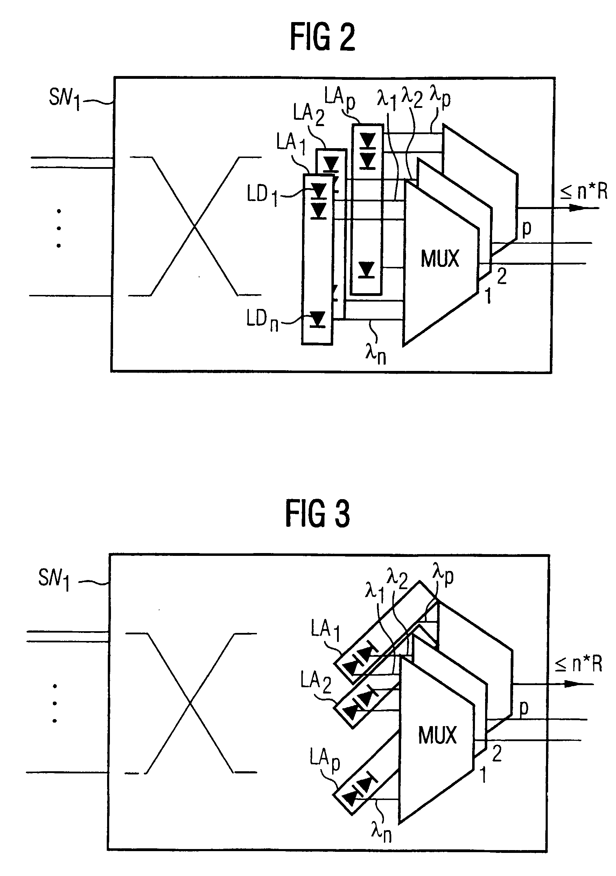

In Fig. 2 ist die Ausgangsstufe der eingangsseitig angeordneten Teilkoppelfelder $SN_1...SN_m$ im Detail aufgezeigt. Demgemäß sind Laserarrays $LA_1...LA_p$ mit n verschiedenen Wellenlängen offenbart. Die optischen Ausgänge eines jeden Laser arrays werden über einen geeigneten Wellenlängen-Multiplexer MUX zusammengefaßt und auf den Eingang eines Sortiernetzwerkes $S_1...S_p$ geleitet. Dies ist hinsichtlich der Wellenlängenstabilisierung vorteilhaft.

In Fig. 3 ist eine weitere mögliche Realisierung der Ausgangsstufe der eingangsseitig angeordneten Teilkoppelfelder $SN_1...SN_m$ aufgezeigt. Dabei können die Laserarrays $LA_1...LA_p$ gedreht gestaffelt angeordnet sein, wobei die die Ausgänge eines Arrays auf alle p WDM-Multiplexer MUX geleitet werden. Es sind dann nur so viele Laserarrays $LA_1...LA_p$ pro Teilkoppelfelder $SN_1...SN_m$ vorzusehen, um die vorhandenen Teilkoppelfelder (also m) anzuschließen. Damit kann das Koppelfeld mit möglichst wenig Aufwand erweitert werden.

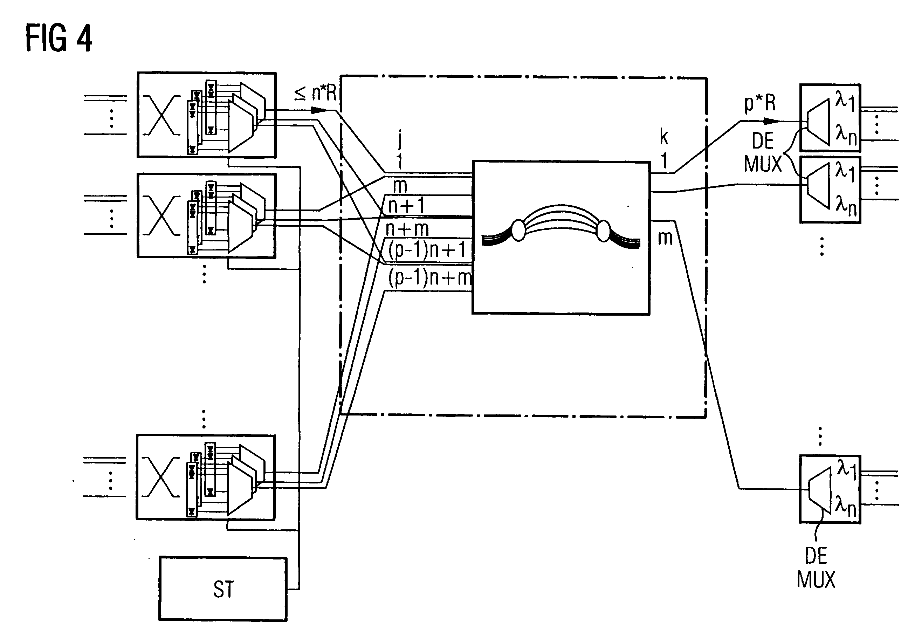

Bei der Ausbildung des Sortiernetzwerkes mit Phased Array Filtereinrichtungen kann eine noch weitere Kompaktierung des Sortiernetzwerkes erreicht werden. Diese Verhältnisse sind in Fig. 4 aufgezeigt. Hier werden alle ankommenden optischen Informationssignale auf ein Sortiernetzwerk gegeben, das einen auf n + p erweiterten Eingangsfächer aufweist. Das Sortiernetzwerk ist für n Teilkoppelfelder ausgelegt. Falls m < n werden nicht alle Ein- und Ausgänge genutzt. Bezüglich der optischen Filterfunktion und der Ausgänge entspricht diese Phased Array Filtereinrichtung den in den vorstehend beschriebenen Anordnungen verwendeten Sortiernetzwerken. Damit werden p - 1 Sortiernetze und alle Verzweiger V eingespart. Ein weiterer wichtiger Vorteil ist in der vereinfachten Filterstabilisierung zu sehen (nur ein zu stabilisierendes Element).

**Patentansprüche**

1. Vorrichtung zum Routen von Informationssignalen durch Koppelfelder, mit eingangsseitig ($S_1...S_m$) und ausgangsseitig angeordneten ($D_1...D_m$) Einrichtungen sowie einer zentralen Steuereinrichtung (ST),
   **dadurch gekennzeichnet,**
   daß ein aus einer Mehrzahl von Teilsortiernetzwerken ($S_1..S_p$) gebildetes Sortiernetzwerk vorgesehen ist, dem optische Informationssignale zugeleitet werden und das nach Maßgabe der Wellenlänge die optischen Informationssignale den ausgangsseitigen Einrichtungen zuführt, wobei der Ausgang einer eingangsseitig angeordneten Einrichtung ($S_1...S_m$) mit jedem der Teilsortiernetzwerke ($S_1...S_p$) verbunden ist, und wobei jeder Ausgang eines der Teilsortiernetzwerke ($S_1...S_p$) an die jeweils zugeordnete ausgangsseitig angeordneten Einrichtungen ($D_1...D_m$) herangeführt ist.

2. Vorrichtung nach Anspruch 1,
   **dadurch gekennzeichnet,**
   daß die eingangsseitig angeordneten Einrichtungen ($S_1...S_m$) als Teilkoppelfelder ausgebildet sind, die eine Umsetzung elektrischer in optische Informationssignale vornehmen.

3. Vorrichtung nach Anspruch 1, 2,
**dadurch gekennzeichnet,**
daß die Umsetzung elektrischer in optische Informationssignale durch Laserdioden erfolgt, die zu Laserarray-Einrichtungen ($LA_1...LA_p$) zusammengefaßt sind.

4. Vorrichtung nach Anspruch 1 bis 3,
**dadurch gekennzeichnet,**
daß die Teilkoppelfelder ($S_1...S_m$) die Laserarray-Einrichtungen ($LA_1...LA_p$) und optische Multiplexeinrichtungen (MUX) aufweisen, wobei die Ausgänge (n) einer Laserarray-Einrichtung jeweils mit einer optischen Multiplexeinrichtung verbunden sind.

5. Vorrichtung nach Anspruch 1 bis 3,
**dadurch gekennzeichnet**,
daß die Teilkoppelfelder ($S_1...S_m$) die Laserarray-Einrichtungen ($LA_1..LA_p$) und optische Multiplexeinrichtungen (MUX) aufweisen, wobei die Ausgänge (n) einer Laserarray-Einrichtung mit mehreren optischen Multiplexeinrichtungen verbunden sind.

6. Vorrichtung nach Anspruch 1 bis 5,
**dadurch gekennzeichnet**,
daß die Mehrzahl von Teilsortiernetzwerken ($S_1...S_p$) aus Phased Array Filtereinrichtungen gebildet ist.

7. Vorrichtung nach Anspruch 1 bis 6,
**dadurch gekennzeichnet**,
daß die Mehrzahl von Teilsortiernetzwerken ($S_1...S_p$) einen auf n + p erweiterten Eingangsfächer aufweist.

8. Vorrichtung nach einem der vorstehenden Ansprüche,
**dadurch gekennzeichnet**,
daß durch Beaufschlagung mehrerer Laserdioden eines Teilkoppelfeldes mit der gleichen Signalinformation Multicast-Betrieb möglich ist.

9. Vorrichtung nach einem der vorstehenden Ansprüche,
**dadurch gekennzeichnet,**
daß die ausgangsseitig angeordneten Einrichtungen($D_1...D_m$) als Demultiplexeinrichtungen ausgebildet sind.

10. Vorrichtung nach einem der vorstehenden Ansprüche,
**dadurch gekennzeichnet,**
daß die Informationssignale als ATM-Informationssignale ausgebildet sind.

# FIG 1

EP 1 052 874 A1

# FIG 2

# FIG 3

FIG 4

**Europäisches Patentamt**

**EUROPÄISCHER RECHERCHENBERICHT**

Nummer der Anmeldung

EP 99 10 9554

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 786 912 A (KARTALOPOULOS STAMATIOS V) 28. Juli 1998 (1998-07-28) * Abbildungen 3-5 * * Spalte 5, Zeile 65 – Spalte 6, Zeile 23 * | 1 | H04Q11/04 H04Q11/00 H04L12/56 |
| A | PARK C ET AL: "ON THE DESIGN OF LARGE ATM SWITCH USING STAR COUPLERS AND TUNABLE DEVICES WITH RESTRAINED TUNING RANGE" IEICE TRANSACTIONS ON COMMUNICATIONS, Bd. E77-B, Nr. 4, 1. April 1994 (1994-04-01), Seiten 469-475, XP000462098 ISSN: 0916-8516 * Abbildung 1 * * Seite 471, rechte Spalte, Zeile 41-48 * | 1 | |
| A | BRACKETT C A: "DENSE WAVELENGTH DIVISION MULTIPLEXING NETWORKS: PRINCIPLES AND APPLICATIONS" IEEE JOURNAL ON SELECTED AREAS IN COMMUNICATIONS, Bd. 8, Nr. 6, 1. August 1990 (1990-08-01), Seiten 948-964, XP000208590 ISSN: 0733-8716 * Abbildung 16 * | 1 | RECHERCHIERTE SACHGEBIETE (Int.Cl.7) H04Q H04L |
| A | LI C –S ET AL: "AUTOMATIC FAULT DETECTION, ISOLATION, AND RECOVERY IN TRANSPARENT ALL-OPTICAL NETWORKS" JOURNAL OF LIGHTWAVE TECHNOLOGY, Bd. 15, Nr. 10, 1. Oktober 1997 (1997-10-01), Seiten 1784-1793, XP000703593 ISSN: 0733-8724 * Abbildung 13 * | 1 | |

Der vorliegende Recherchenbericht wurde für alle Patentansprüche erstellt

| Recherchenort | Abschlußdatum der Recherche | Prüfer |
|---|---|---|
| DEN HAAG | 22. Oktober 1999 | Dhondt, E |

## ANHANG ZUM EUROPÄISCHEN RECHERCHENBERICHT
## ÜBER DIE EUROPÄISCHE PATENTANMELDUNG NR.

EP 99 10 9554

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-10-1999

| Im Recherchenbericht angeführtes Patentdokument | Datum der Veröffentlichung | Mitglied(er) der Patentfamilie | Datum der Veröffentlichung |
|---|---|---|---|
| US 5786912    A | 28-07-1998 | KEINE | |

Für nähere Einzelheiten zu diesem Anhang : siehe Amtsblatt des Europäischen Patentamts, Nr. 12/82

EPO FORM P0461